# EUROPÄISCHE PATENTSCHRIFT

(11) **EP 2 701 360 B1**
(45) Veröffentlichungstag und Bekanntmachung des Hinweises auf die Patenterteilung: **08.05.2019**
(21) Anmeldenummer: 13179581.7
(22) Anmeldetag: 07.08.2013
(51) Int. Cl.: H04L 29/06

(54) **Hausgerät mit Kommunikationsmodul**
Domestic appliance with communication module
Appareil ménager avec module de communication

(30) Priorität: 21.08.2012 DE 102012214794
(43) Veröffentlichungstag der Anmeldung: 26.02.2014
(73) Patentinhaber: BSH Hausgeräte GmbH, 81739 München (DE)
(72) Erfinder: Gaugler, Johannes, 93073 Neutraubling (DE); Kolbe, Andreas, 12683 Berlin (DE); Leitl-Nobel, Martin, 86465 Welden (DE); Ranck, Sharon, 89407 Dillingen (DE); Sippel, Matthias, 83329 Waging am See (DE)

(56) Entgegenhaltungen:
- WO-A2-01/05087
- DE-A1-102004 014 411
- DE-A1-102009 059 893
- DE-B3-102004 056 089
- DE-T2- 60 019 750
- DE-T2- 69 734 700
- US-A1- 2003 051 146
- US-A1- 2010 023 755
- US-A1- 2011 268 273
- US-B1- 7 412 726

## Beschreibung

Die vorliegende Erfindung betrifft ein Hausgerät mit einem Kommunikationsmodul zum Übermitteln von Daten zwischen einem internen Kommunikationspartner und einem externen Kommunikationspartner.

Aktuell besteht der Trend, Hausgeräte zu vernetzen. Dabei steht vor allem die Vernetzung der Geräte untereinander oder zu Smartphones, Handhelds oder Computern im Vordergrund. Die Übermittlung von Daten kann an einen Kundendienst, einen Energieversorger, ein Kommunikationsunternehmen oder andere Servicedienstleister erfolgen. Als Kommunikationsmedium kommen sowohl drahtgebundene Technologien wie Ethernet oder Stromkabel einer Leistungsversorgung (PLC - Powerline Communication) aber auch drahtlose Technologien in Frage.

Bei der Anbindung von Hausgeräten in Datennetzwerke können sensible Daten, die Rückschlüsse auf die Gewohnheiten eines Benutzers zulassen, über das Datennetzwerk an einen Server übermittelt werden. Bei der Übermittlung über ein offenes Netz können diese Daten jedoch unberechtigterweise bei der Übertragung zwischen dem Hausgerät und dem empfangenden Server abgefangen und mitgelesen werden.

Die DE 10 2004 056089 B3 offenbart ein Hausgerät und einen Netzwerkadapter, der ein Verschlüsselungsmodul für eine verschlüsselte Kommunikation zwischen einem internen Kommunikationspartner eines Hausgerätes und einem externen Kommunikationspartner außerhalb des Hausgerätes aufweist.

Die US 2003/051146 A1 offenbart einen Kühlschrank mit einer CPU, die vorgesehen ist, das Hausgerät zu steuern und Daten zu verschlüsseln und zu entschlüsseln und mit einem peripheren Controller zu kommunizieren, welcher wiederum vorgesehen ist, mit einem externen Kommunikationspartner die verschlüsselten Daten auszutauschen.

Die DE 10 2009 059893 A1 beschreibt ein Verfahren zum Absichern eines Aushandelns von mindestens einem kryptographischen Schlüssel zwischen Geräten.

Die US 2010/023755 A1 beschreibt ein Verfahren zum sicheren Überspielen von Daten von einer Plattform zu einer anderen.

Es ist die der Erfindung zugrundeliegende Aufgabe, ein Hausgerät mit einem Kommunikationsmodul anzugeben, bei dem die Vertraulichkeit der gesendeten Daten sichergestellt werden kann.

Diese Aufgabe wird durch ein Hausgerät mit den Merkmalen nach Anspruch 1 gelöst. Vorteilhafte Ausführungsformen der Erfindung sind Gegenstand der Figuren, der Beschreibung und der abhängigen Ansprüche.

Gemäß einem ersten Aspekt der Erfindung wird die Aufgabe durch ein Hausgerät mit einem Kommunikationsmodul zum Übermitteln von Daten zwischen einem internen Kommunikationspartner innerhalb des Haushaltsgerätes und einem externen Kommunikationspartner außerhalb des Haushaltsgerätes gelöst, bei dem das Kommunikationsmodul ein Verschlüsselungsmodul zum Verschlüsseln von Ausgangsdaten von dem internen Kommunikationspartner zu dem externen Kommunikationspartner und zum Entschlüsseln von Eingangsdaten von dem externen Kommunikationspartner zu dem internen Kommunikationspartner umfasst. Der externe Kommunikationspartner kann beispielsweise eine Computer, ein Server oder ein Smartphone sein. Dadurch wird der technische Vorteil erreicht, dass ein abhörsicherer Datenkanal zum zwischen einem Hausgerät und einem externen Kommunikationspartner aufgebaut werden kann, um ein Mithören der Inhalte von Dritten zu unterbinden.

Unter einem Haushaltsgerät wird ein Gerät verstanden, das zur Haushaltsführung eingesetzt wird. Derartige Geräte sind auch unter dem Begriff "Weiße Ware" bekannt. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie beispielsweise ein Kühlschrank, ein Gefrierschrank oder eine Kühlgefrierkombination. Das Hausgerät kann aber auch ein Haushaltskleingerät sein, wie beispielsweise ein Warmwasserbereiter, ein Kaffeevollautomat, eine Küchenmaschine oder ein Staubsauger.

Zudem umfasst das Verschlüsselungsmodul einen nicht-flüchtigen Speicher zum Speichern eines Schlüssels. Dadurch wird beispielsweise der technische Vorteil erreicht, dass ein Schlüssel dauerhaft in dem Verschlüsselungsmodul gespeichert werden kann. Beispielsweise kann der Schlüssel vorgespeichert sein, beispielsweise durch einen Hersteller des Hausgerätes.

Ferner ist der nicht-flüchtige Speicher in das Verschlüsselungsmodul einsetzbar. Ein derartiger Speicher kann beispielsweise durch eine Simkarte, Chipkarte oder Smartcard gebildet werden. Dadurch wird beispielsweise der technische Vorteil erreicht, dass der Speicher zusammen mit dem Schlüssel aus dem Gerät entnehmbar ist, beispielsweise wenn das Hausgerät einen Benutzer wechselt.

Des Weiteren umfasst der nicht-flüchtige Speicher einen öffentlichen Schlüssel und einen privaten Schlüssel. Dadurch wird beispielsweise der technische Vorteil erreicht, dass mithilfe des öffentlichen Schlüssels Eingangsdaten, die an das Hausgerät gerichtet sind, von jedermann verschlüsselt werden können.

Außerdem ist das Kommunikationsmodul ausgebildet, den öffentlichen Schlüssel an einen externen Server zu senden. Dadurch wird beispielsweise der technische Vorteil erreicht, dass der öffentliche Schlüssel für das Haushaltsgerät von unterschiedlichen externen Kommunikationspartnern abgerufen werden kann.

In einer vorteilhaften Ausführungsform des Hausgeräts sind das Kommunikationsmodul und das Verschlüsselungsmodul auf einer gemeinsamen Leiterplatte angeordnet. Dadurch wird beispielsweise der technische Vorteil erreicht, dass das Kommunikationsmodul und das Verschlüsselungsmodul in einem Arbeitsgang beim Bestücken einer Leiterplatte aufgebracht werden können und sich ein Verkabelungsaufwand vermindert.

In einer weiteren vorteilhaften Ausführungsform des Hausgeräts umfasst das Verschlüsselungsmodul einen Ausgangsspeicher zum Zwischenspeichern der zu verschlüsselnden Ausgangsdaten. Dadurch wird beispielsweise der technische Vorteil erreicht, dass auch eine schwankende Durchsatzrate an Ausgangsdaten zuverlässig verschlüsselt werden kann.

In einer weiteren vorteilhaften Ausführungsform des Hausgeräts umfasst das Verschlüsselungsmodul einen Eingangsspeicher zum Zwischenspeichern der zu entschlüsselnden Eingangsdaten. Dadurch wird beispielsweise der technische Vorteil erreicht, dass auch eine schwankende Durchsatzrate an Eingangsdaten zuverlässig entschlüsselt werden kann.

In einer weiteren vorteilhaften Ausführungsform des Hausgeräts wird das Verschlüsselungsmodul durch eine Verschlüsselungsschaltung auf einem elektronischen Chip gebildet. Dadurch wird beispielsweise der technische Vorteil erreicht, dass eine festverdrahtete Verschlüsselungsschaltung verwendet wird, die sich durch schädliche Software nicht beeinflussen oder umgehen lässt.

In einer weiteren vorteilhaften Ausführungsform des Hausgeräts umfasst das Verschlüsselungsmodul ein Komprimierungsmodul zum Komprimieren der Ausgangsdaten und zum Dekomprimieren der Eingangsdaten. Dadurch wird beispielsweise der technische Vorteil erreicht, dass sich ein Übertragungsvolumen und ein Verschlüsselungsaufwand vermindern.

In einer weiteren vorteilhaften Ausführungsform des Hausgeräts ist das Verschlüsselungsmodul ausgebildet, ein Verschlüsseln der Ausgangsdaten und/oder ein Entschlüsseln der Eingangsdaten nach zumindest einem der folgenden Standards: ASN, CIPE, OpenVPN, IPsec, L2TP, OpenPGP, PKCS, SSL, S/MIME, TLS, X.509, SSH oder SSTP durchzuführen. Dadurch wird beispielsweise der technische Vorteil erreicht, dass eine besonders abhörsichere Kommunikation erreicht wird.

In einer vorteilhaften Ausführungsform des Hausgerätes umfasst das Hausgerät einen bedienbaren Schalter zum Aktivieren oder Deaktivieren des Verschlüsselungsmoduls. Dadurch wird beispielsweise der technische Vorteil erreicht, dass je nach Wunsch eines Benutzers eine Verschlüsselung ein- oder ausgeschaltet werden kann.

In einer weiteren vorteilhaften Ausführungsform des Hausgerätes umfasst das Hausgerät eine Anzeigeeinrichtung zum Anzeigen eines Aktivierungszustandes des Verschlüsselungsmoduls. Dadurch wird beispielsweise der technische Vorteil erreicht, dass der Benutzer erkennen kann, ob eine Verschlüsselung der Daten vorgenommen wird.

In einer vorteilhaften Ausführungsform des Hausgerätes umfasst das Hausgerät eine Leiterplatte, auf der das Kommunikationsmodul und der interne Kommunikationspartner angeordnet sind. Dadurch wird beispielsweise ebenfalls der technische Vorteil erreicht, dass das Kommunikationsmodul und der interne Kommunikationspartner in einem Arbeitsgang beim Bestücken einer Leiterplatte aufgebracht werden können und sich ein Verkabelungsaufwand vermindert.

Ausführungsbeispiele der Erfindung sind in der Zeichnung dargestellt und werden im Folgenden näher beschrieben.

Es zeigen:

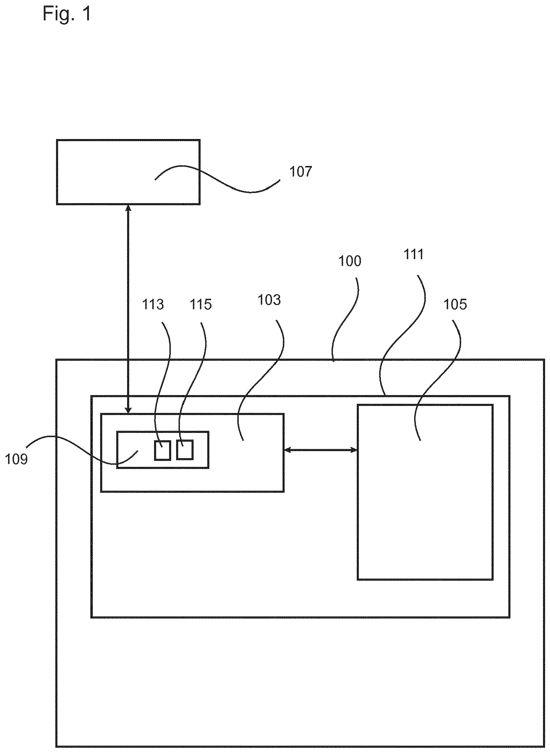

Fig. 1 eine schematische Ansicht eines Hausgerätes mit einem Kommunikationsmodul und einem Verschlüsselungsmodul.

Fig. 1 zeigt eine schematische Ansicht eines Hausgerätes 100 mit einem Verschlüsselungsmodul 109. Das Haushaltsgerät 100 umfasst einen internen Kommunikationspartner 105 und ein Kommunikationsmodul 103. Der interne Kommunikationspartner 105 ist beispielsweise eine Hausgerätelektronik, die zur Steuerung und zum elektrischen Betrieb des Hausgerätes 100 dient.

Das Kommunikationsmodul 103 umfasst eine Kommunikationselektronik, die dazu dient, Daten zwischen einem externen Kommunikationspartner 107 und dem internen Kommunikationspartner 105 zu übermitteln. Das Kommunikationsmodul 103 kann beispielsweise durch einen elektronischen Chip gebildet sein, der auf eine Leiterplatte 111 aufgesteckt oder aufgelötet wird. Das Kommunikationsmodul 103 kann beispielsweise durch eine Kombination aus Mikrocontroller, Speicher, Transceiver, Antenne, Antennenschalter oder Hochfrequenzauskopplung gebildet sein. Das Kommunikationsmodul 103 kann in oder am Hausgerät 100 verbaut sein.

Das Verschlüsselungsmodul 109 dient zum Verschlüsseln von Ausgangsdaten von dem internen Kommunikationspartner 105 zu dem externen Kommunikationspartner 107 und zum Entschlüsseln von Eingangsdaten von dem externen Kommunikationspartner 107 zu dem internen Kommunikationspartner 105. Zu diesem Zweck verwendet das Verschlüsselungsmodul 109 einen geeigneten Verschlüsselungsalgorithmus, der die Ausgangsdaten erzeugt.

Das Verschlüsselungsmodul 109 kann beispielsweise einen Ausgangsspeicher 113 zum Zwischenspeichern (Puffern) von zu verschlüsselnden Ausgangsdaten umfassen, die von dem internen Kommunikationspartner 105 an das Kommunikationsmodul 103 übertragen worden sind. Zusätzlich kann das Verschlüsselungsmodul 109 einen Eingangsspeicher 115 zum Zwischenspeichern (Puffern) von zu entschlüsselnden Eingangsdaten umfassen, die von dem externen Kommunikationspartner 107 an das Kommunikationsmodul 103 übertragen worden sind. Bei dem Eingangs- und dem Ausgangsspeicher kann es sich beispielsweise um einen RAM-Speicher handeln.

Weiter umfasst das Verschlüsselungsmodul 109 einen nicht-flüchtigen Speicher zum Speichern eines Schlüssels. Der Schlüssel dient zum Ver- und Entschlüsseln der Eingangs- und Ausgangsdaten mit einem Verschlüsselungsalgorithmus. Der Schlüssel kann beispielsweise bereits bei der Produktion des Hausgerätes 100 in dem Speicher abgelegt werden. Der Speicher wird durch einen Nurlese-Speicher (ROM-Speicher) gebildet. Dies weist den Vorteil auf, das der einmal abgelegte Schlüssel nicht verändert werden kann.

Daneben ist der Speicher mitsamt dem Schlüssel derart ausgestaltet, dass dieser aus dem Hausgerät 100 entnehmbar ist. Beispielsweise ist der Schlüssel auf einer Chipkarte gespeichert, die in einen entsprechenden Einsatz in dem Verschlüsselungsmodul 109 einsetzbar ist. In diesem Fall kann der Schlüssel aus dem Hausgerät 100 entnommen werden und für ein anderes Hausgerät 100 verwendet werden, beispielsweise wenn der Benutzer ein neues Hausgerät 100 erwirbt und seine Verschlüsselungsdaten weiter verwenden will.

Der Schlüssel ist durch ein Schlüsselpaar mit einem öffentlichen Schlüssel und einem privaten Schlüssel gebildet. Der private Schlüssel dient in diesem Fall zur Entschlüsselung von Eingangsdaten, die zuvor von dem externen Kommunikationspartner 107 mithilfe des öffentlichen Schlüssels verschlüsselt worden sind. Daneben kann der Speicher zum Speichern öffentlicher Schlüssel einer oder mehrerer externer Kommunikationspartner 107 dienen.

Um eine abhörsichere Kommunikation zwischen dem externen und dem internen Kommunikationspartner 105 und 107 zu ermöglichen, ist das Kommunikationsmodul 103 ausgebildet, den öffentlichen Schlüssel an einen externen Server zu senden. Will ein externer Kommunikationspartner 107 die Kommunikation mit dem internen Kommunikationspartner 105 verschlüsseln, kann er den öffentlichen Schlüssel von dem Server abrufen.

Das Verschlüsselungsmodul 109 kann durch eine festverdrahtete Verschlüsselungsschaltung auf einem elektronischen Chip gebildet werden. Dadurch wird erreicht, dass der Verschlüsselungsalgorithmus nicht durch einen unautorisierten Verschlüsselungsalgorithmus ersetzt werden kann, beispielsweise durch Schadsoftware.

Das Haushaltsgerät 100 kann einen bedienbaren Schalter zum Aktivieren oder Deaktivieren des Verschlüsselungsmoduls 109 umfassen. Dadurch kann je nach Wunsch eines Benutzers eine Verschlüsselung auf einfache Weise ein- oder ausgeschaltet werden. Legt beispielsweise ein Benutzer keinen Wert auf eine abhörsichere Übertragung der Daten oder unterstützt der externe Kommunikationspartner 107 keine Verschlüsselung, kann die Verschlüsselung manuell deaktiviert werden.

Um den Zustand des Verschlüsselungsmoduls 109 zu überwachen, kann eine Anzeigeeinrichtung zum Anzeigen eines Aktivierungszustandes des Verschlüsselungsmoduls 109 vorgesehen sein. Fällt das Verschlüsselungsmodul 109 aus oder ist das Verschlüsselungsmodul 109 deaktiviert worden, kann dieser Umstand einem Benutzer durch die Anzeigeeinrichtung optisch oder akustisch angezeigt werden.

Zusätzlich kann in dem Verschlüsselungsmodul 109 ein Komprimierungsmodul zum Komprimieren der Ausgangsdaten und zum Dekomprimieren der Eingangsdaten vorgesehen sein. Das Komprimierungsmodul 109 kann ebenfalls durch eine festverdrahtete Komprimierungsschaltung auf einem elektronischen Chip gebildet werden, so dass der Komprimierungsalgorithmus nicht verändert werden kann.

Der interne Kommunikationspartner 105, das Kommunikationsmodul 103 und das Verschlüsselungsmodul 109 können auf der gleichen Leiterplatte 111 angeordnet sein, beispielsweise auf einer Platine der Hausgeräte- oder Anzeigensteuerung. In einer weiteren Ausführungsform kann das Kommunikationsmodul 103 auf einer separaten Leiterkarte angeordnet sein oder durch einen USB-WLAN-Stick gebildet werden.

Im Allgemeinen kann zur Ver- und Entschlüsselung jeder Standard und jedes Protokoll verwendet werden, dass eine abhörsichere Kommunikation der Daten zulässt. Als Verschlüsselungsprotokoll können hierfür ASN, CIPE, OpenVPN, IPsec, L2TP, OpenPGP, PKCS, SSL, S/MIME, TLS, X.509, SSH, SSTP oder weitere dienen.

Durch das erfindungsgemäße Haushaltsgerät kann ein abhörsicherer Datenkanal von und zu dem Hausgerät aufgebaut werden. Durch das Haushaltsgerät 100 lassen sich verschlüsselte Verbindungen zu externen Geräten, wie beispielsweise einem Server oder anderen Endgräten herstellen, so dass ein unberechtigtes Mitlesen von Daten verhindert werden kann.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Haushaltsgerät
- 103: Kommunikationsmodul
- 105: interner Kommunikationspartner
- 107: externer Kommunikationspartner
- 109: Verschlüsselungsmodul
- 111: Leiterplatte
- 113: Ausgangsspeicher
- 115: Eingangsspeicher

## Patentansprüche

1. Hausgerät (100) aufweisend einen internen Kommunikationspartner (105) innerhalb des Haushaltsgerätes (100) und ein Kommunikationsmodul (103) zum Übermitteln von Daten zwischen dem internen Kommunikationspartner (105) und einem externen Kommunikationspartner (107) außerhalb des Haushaltsgerätes (100), wobei das Kommunikationsmodul (103) ein Verschlüsselungsmodul (109) zum Verschlüsseln von Ausgangsdaten von dem internen Kommunikationspartner (105) zu dem externen Kommunikationspartner (107) und zum Entschlüsseln von Eingangsdaten von dem externen Kommunikationspartner (107) zu dem internen Kommunikationspartner (105) umfasst, **dadurch gekennzeichnet, dass** das Verschlüsselungsmodul (109) einen nicht-flüchtigen Speicher zum Speichern eines Schlüssels umfasst, wobei der Schlüssel durch ein Schlüsselpaar mit einem öffentlichen Schlüssel und einem privaten Schlüssel gebildet ist, wobei der private Schlüssel zum Entschlüsseln der Eingangsdaten dient, die zuvor von dem externen Kommunikationspartner (107) mithilfe des öffentlichen Schlüssels verschlüsselt worden sind, der nicht-flüchtige Speicher in das Verschlüsselungsmodul (109) einsetzbar und entnehmbar ist und das Kommunikationsmodul (103) ausgebildet ist, den öffentlichen Schlüssel für ein Abrufen des öffentlichen Schlüssels durch den externen Kommunikationspartner (107) an einen externen Server zu senden.

2. Hausgerät (100) nach Anspruch 1, **dadurch gekennzeichnet, dass** das Kommunikationsmodul (103) und das Verschlüsselungsmodul (107) auf einer gemeinsamen Leiterplatte (111) angeordnet sind.

3. Hausgerät (100) nach einem der vorangehenden Ansprüche, **dadurch gekennzeichnet, dass** das Verschlüsselungsmodul (109) einen Ausgangsspeicher (113) zum Zwischenspeichern der zu verschlüsselnden Ausgangsdaten umfasst.

4. Hausgerät (100) nach einem der vorangehenden Ansprüche, **dadurch gekennzeichnet, dass** das Verschlüsselungsmodul (109) einen Eingangsspeicher (115) zum Zwischenspeichern der zu entschlüsselnden Eingangsdaten umfasst.

5. Hausgerät (100) nach einem der vorangehenden Ansprüche, **dadurch gekennzeichnet, dass** das Verschlüsselungsmodul (109) durch eine Verschlüsselungsschaltung auf einem elektronischen Chip gebildet wird.

6. Hausgerät (100) nach einem der vorangehenden Ansprüche, **dadurch gekennzeichnet, dass** das Verschlüsselungsmodul (109) ein Komprimierungsmodul (119) zum Komprimieren der Ausgangsdaten und zum Dekomprimieren der Eingangsdaten umfasst.

7. Hausgerät (100) nach einem der vorangehenden Ansprüche, **dadurch gekennzeichnet, dass** das Verschlüsselungsmodul (109) ausgebildet ist, ein Verschlüsseln der Ausgangsdaten und/oder ein Entschlüsseln der Eingangsdaten nach zumindest einem der folgenden Standards durchzuführen:
- ASN,
- CIPE,
- OpenVPN,
- IPsec,
- L2TP,
- OpenPGP,
- PKCS,
- SSL,
- S/MIME,
- TLS,
- X.509,
- SSH, oder
- SSTP.

8. Hausgerät (100) nach einem der vorangehenden Ansprüche, **dadurch gekennzeichnet, dass** das Hausgerät (100) einen bedienbaren Schalter zum Aktivieren oder Deaktivieren des Verschlüsselungsmoduls (109) umfasst.

9. Hausgerät (100) nach einem der vorangehenden Ansprüche, **dadurch gekennzeichnet, dass** das Hausgerät (100) eine Anzeigeeinrichtung zum Anzeigen eines Aktivierungszustandes des Verschlüsselungsmoduls (109) umfasst.

10. Hausgerät (100) nach einem der vorangehenden Ansprüche, **dadurch gekennzeichnet, dass** das Hausgerät eine Leiterplatte (111) umfasst, auf der das Kommunikationsmodul (103) und der interne Kommunikationspartner (105) angeordnet sind.

## Claims

1. Household appliance (100) having an internal communication partner (105) within the household appliance (100) and a communication module (103) for transferring data between the internal communication partner (105) and an external communication partner (107) outside of the household appliance (100), wherein the communication module (103) comprises an encryption module (109) for encrypting output data from the internal communication partner (105) to the external communication partner (107) and for encrypting input data from the external communication partner (107) to the internal communication partner (105), **characterised in that** the encryption module (109) comprises a non-volatile memory for storing a key, wherein the key is formed by a key pair with a public key and a private key, wherein the private key is used to decrypt the input data which has been encrypted beforehand by the external communication partner (107) with the aid of the public key, the non-volatile memory can be inserted into and removed from the encryption module (109) and the communication module (103) is embodied to send the public key to an external server for retrieval of the public key by the external communication partner (107).

2. Household appliance (100) according to claim 1, **characterised in that** the communication module (103) and the encryption module (107) are arranged on a shared printed circuit board (111).

3. Household appliance (100) according to one of the preceding claims, **characterised in that** the encryption module (109) comprises an output memory (113) for buffering the output data to be encrypted.

4. Household appliance (100) according to one of the preceding claims, **characterised in that** the encryption module (109) comprises an input memory (115) for buffering the input data to be encrypted.

5. Household appliance (100) according to one of the preceding claims, **characterised in that** the encryption module (109) is formed by an encryption circuit on an electronic chip.

6. Household appliance (100) according to one of the preceding claims, **characterised in that** the encryption module (109) comprises a compression module (119) for compressing the output data and for decompressing the input data.

7. Household appliance (100) according to one of the preceding claims, **characterised in that** the encryption module (109) is embodied to carry out an encryption of the output data and/or a decryption of the input data according to at least one of the following standards:
- ASN,
- CIPE,
- OpenVPN,
- IPsecL2TP,
- OpenPGP,
- PKCS,
- SSL,
- S/MIME,
- TLS,
- X.509,
- SSH, or
- SSTP.

8. Household appliance (100) according to one of the preceding claims, **characterised in that** the household appliance (100) comprises an operable switch for activating or deactivating the encryption module (109).

9. Household appliance (100) according to one of the preceding claims, **characterised in that** the household appliance (100) comprises a display device for displaying an activation state of the encryption module (109).

10. Household appliance (100) according to one of the preceding claims, **characterised in that** the household appliance comprises a printed circuit board (111), on which the communication module (103) and the internal communication partner (105) are arranged.

## Revendications

1. Appareil ménager (100) comprenant un partenaire de communication interne (105) à l'intérieur de l'appareil ménager (100) et un module de communication (103) permettant de transmettre des données entre le partenaire de communication interne (105) et un partenaire de communication externe (107) à l'extérieur de l'appareil ménager (100), dans lequel le module de communication (103) comprend un module de cryptage (109) destiné à crypter des données de sortie du partenaire de communication interne (105) vers le partenaire de communication externe (107) et à décrypter des données d'entrée provenant du partenaire de communication externe (107) et entrant dans le partenaire de communication interne (105), **caractérisé en ce que** le module de cryptage (109) comprend une mémoire non volatile permettant de stocker une clé, dans lequel la clé est constituée d'une paire de clés incluant une clé publique et une clé privée, la clé privée servant à décrypter les données d'entrée qui ont été cryptées précédemment par le partenaire de communication externe (107) au moyen de la clé publique, la mémoire non volatile peut être insérée dans le module de cryptage (109) et retirée de celui-ci et le module de communication (103) est configuré de manière à envoyer la clé publique à un serveur externe pour permettre une récupération de la clé publique par le partenaire de communication externe (107).

2. Appareil ménager (100) selon la revendication 1, **caractérisé en ce que** le module de communication (103) et le module de cryptage (107) sont agencés sur une carte de circuit imprimé (111) commune.

3. Appareil ménager (100) selon l'une des revendications précédentes, **caractérisé en ce que** le module de cryptage (109) comprend une mémoire de sortie (113) destinée à stocker temporairement les données de sortie à crypter.

4. Appareil ménager (100) selon l'une des revendications précédentes, **caractérisé en ce que** le module de cryptage (109) comprend une mémoire d'entrée (115) destinée à stocker temporairement les données d'entrée à décrypter.

5. Appareil ménager (100) selon l'une des revendications précédentes, **caractérisé en ce que** le module de cryptage (109) est formé par un circuit de cryptage sur une puce électronique.

6. Appareil ménager (100) selon l'une des revendications précédentes, **caractérisé en ce que** le module de cryptage (109) comprend un module de compression (119) destiné à compresser les données de sortie et à décompresser les données d'entrée.

7. Appareil ménager (100) selon l'une des revendications précédentes, **caractérisé en ce que** le module de cryptage (109) est configuré de manière à exécuter un cryptage des données de sortie et/ou un décryptage des données d'entrée selon au moins un des standards suivants :
- ASN,
- CIPE,
- OpenVPN,
- IPsec,
- L2TP,
- OpenPGP,
- PKCS,
- SSL,
- S/MIME,
- TLS,
- X.509,
- SSH ou
- SSTP.

8. Appareil ménager (100) selon l'une des revendications précédentes, **caractérisé en ce que** l'appareil ménager (100) comprend un commutateur pouvant être manoeuvré pour activer ou désactiver le module de cryptage (109).

9. Appareil ménager (100) selon l'une des revendications précédentes, **caractérisé en ce que** l'appareil ménager (100) comprend un dispositif d'affichage destiné à afficher un état d'activation du module de cryptage (109).

10. Appareil ménager (100) selon l'une des revendications précédentes, **caractérisé en ce que** l'appareil ménager comprend une carte de circuit imprimé (111), sur laquelle le module de communication (103) et le partenaire de communication interne (105) sont agencés.
